# EUROPEAN PATENT APPLICATION

(11) **EP 3 805 951 A1**
(43) Date of publication of application: **14.04.2021**
(21) Application number: 19810203.0
(22) Date of filing: 22.03.2019
(51) Int. Cl.: G06F 16/38, G06F 21/60

(54) **METHOD FOR TRANSMITTING INFORMATION**

(30) Priority: 28.05.2018 RU 2018119556
(71) Applicant: Redkokashin, Ilya Vladimirovich, G. Rostov-na-Donu 344065 (RU)
(72) Inventor: Redkokashin, Ilya Vladimirovich, G. Rostov-na-Donu 344065 (RU)
(74) Representative: Osmans, Voldemars
(86) International application number: PCT/RU2019/000180
(87) International publication number: WO 2019/231351

(57) **Abstract**

The invention relates to the field of computer networks, in particular to mobile technologies. More specifically, the invention relates to methods of information transmission. A method of information transmission includes recording contact information on a server and assigning an identifier for exchange of these identifiers between users, wherein the contact information itself is concealed. According to a second embodiment, a method of personal information transmission includes: assigning contact information of a user to general information, concealing the contact information and transmitting this information between users only after confirmation by the user to whom the contact data belong. The proposed invention provides control in transmitting contact and other personal information.

## Description

### TECHNICAL FIELD

The invention relates to computer networks, particularly to mobile technologies. In particular the invention relates to information transmission methods.

### PRECEDING LEVEL OF TECHNOLOGY

In our days, for transmission and exchange of data, whether it will be a phone number or messenger id or social network id, it is necessary to make some operations for recording and saving contacts data.

The known "Automatic phone number to website linking system and method" US 2006/0099931, H04L 12/58, 06/11/2006, in which, receive a phone number from a user, then receive data automatically from a remote location based on phone numbers and display data for the user. In this case, we are talking about switching to an Internet site using a mobile phone number.

This method is convenient for exchanging information, but has an important drawback. Information indicating the phone number is accessible to all and there is no way to control the transfer of such information between users.

The task set by the developer of the method of transmitting information is to develop a method that, in comparison with analogues, would allow to control the transfer of contact and other personal information.

The technical result of the proposed method for transmitting information is to control the transfer of contact and other personal information.

### DISCLOSURE OF INVENTION

The essence of the method of transmitting information is that, using the server, a request from a user created on a mobile device containing information about another user is received, after that on the mobile device of user, transmitting personal information about users, which are in their mobile devices phonebooks, simultaneously by user who create request and the user which information about is contained in the request. Information on all users that are in the phone book of the user's mobile device, information about which was contained in the request, can be transmitted to the user's mobile device. If the user, whose information is contained in the request, has completely or partially hidden personal information about the users who are in the phone book of the mobile device, then hidden personal information is not transmitted to the mobile device. The transmitted personal information may not contain contact information.

According to another embodiment, the essence information transmission method is that a server receives a request from a user created on a mobile device containing information about the user being sought for, after which the server searches for matching contacts by analyzing the contact books of the user who entered the request and the sought user dividing all contacts into two groups, in the first group all the contacts of the user who entered the request, and in the second contacts of the sought user, then they compare the contacts from the first and the second group among themselves, if there are no match contacts between the first and second group, then analyze the contact books of all contacts from the first and second groups replenishing the number of analyzed contacts in each group by comparing the contacts of the first and second groups among themselves in search of matches, if there are matches the first and second groups are not found, they continue to replenish the number of contacts in the first and second groups due to the contact books of existing contacts, and compare them until a match is found acts between the first and second group, after the matches are found at any step of comparison, inform the user who entered the request a chain of contacts built according to the principle of the shortest path of contacts from the user who made the request to the sought user.

According to a third embodiment, the essence information transmission method is that at first, with the using of computer, registering users on the server with their contact information, identifiers are assigning, and the contact information of the users is hiding, after that the server is connecting to at least one information exchange service, and users devices are given the ability to exchange the above identifiers, so that for the transfer of each individual identifier, it will be necessary to get confirmation of the user to which this identifier assigned, then after a user's request containing another user's identifier and information about the data exchange service, providing transmitting information using the server between these users using the service specified in the request and user contact information for this service. The transmitting identifiers can hiding, displaying to users on their devices general information about the users to whom these identifiers are assigned and enable users to initiate requests by pressing on general information about users and services which can be used to connect with this users.

According to a fourth embodiment, the essence information transmission method is that it providing the ability for users to mobile devices to exchange contact and general information about users, and the contact information of users is not displaying on mobile devices and assigned to general information about users, and general information about users is displayed on mobile devices and by means of it use the contact information assigned to it, and before transmitting contact information, request confirmation this transmission on user's device who's contact information transmitting.

### EXAMPLE OF A SPECIFIC APPLICATION OF THE INVENTION

The inventive method of transmitting information is as follows. To implement the claimed method according to the first embodiment, which provides improved manageability of contact and other personal information, the server is given access to mobile devices of users, such as cell phones having a contact book of subscribers, and access to information stored in contact books. When a user wants to know the common contacts that he has with another user, he sends a request using a mobile device containing information about another user to the server, and the server transmits information about the shared contacts of the user who created the request and the user which information about is contained in the request. The server can transmit to the user who created the request information about all the contacts of the user contained in the request, provided that they are not hidden. Contact information can either contain the contact information itself, such as a phone number, email, and other network identifiers, or not contain them, displaying only general information about the contacts without the possibility of contacting them.

In another way of transmitting information, which improves the manageability of contact and other personal information, the server is given access to user devices, such as cell phones having a contact book of subscribers, and access to information stored in contact books or computers containing various contact information, including through the means of servers of individual social networks and other communication services. The user, wishing to find a specific user and not being able to contact him, enters publicly available information about the user, such as the full name or company and position of that user in the above company or other information available to the server about the user he is looking for, and sends a request to the server with this information. Further, the server analyzes all the contacts of the user who created the request and the sought user for, the information about which is contained in the request using their contact books on a mobile phone or other contact data repositories if the search is carried out using social networks, instant messengers, etc. The contact is understood as any information giving the opportunity to contact the user, such as a mobile phone number, identifier of a social network or messenger, etc. By analyzing the contacts, the server divides them into two groups. In one group, all contacts of the user who created the request, including himself, and in another, all contacts of the sought user and his contact. The contacts of both groups are compared among themselves in the search for mutual friends. For example, if analyzing contacts using the contact phonebooks, then the task is to find through whom the user who created the request can contact the sought user. If, when comparing the contacts of both groups, there are matches, then the user who created the request is informed that a match has been found, and, for example, a certain user A is available both in the contact book of the user who created the request and in the contact book of the sought user. Accordingly, the user who created the request can contact the sought user requesting for his contact from user A. The same is true if you analyze, for example, common friends on a social network. If no matches are found, then all contacts are analyzed, those contacts that already exist in both groups, increasing the number of contacts in both groups. For example, if the user who created the request in the contact book has users A and B, and the sought user in the contact book has users C and D, then there are no matches and the contact books of all contacts that are in both groups are analyzed. First group having the contacts of the user who created the request and the contacts of users A and B is replenished with the contacts that are in the contacts book of users A and B, and the second group having the contact of the sought user and users C and D is replenished with the contacts of the users who are in the contacts book of users C and D. In other words, two contact pyramids are created by the server, which expand with each next level until matches of contacts from these pyramids are found. After finding matches, the user who created the request is sent information about the contact chain with the help of which it will be possible to find out the contact information of the sought user. For example, with the help of user A, you can find out the contact of user E, from whom you can find the contact of user M, from which you can find the contact of the sought user. Thus, it is possible to systematically manage all contact information and easily find the contacts of any users with the help of existing contacts and a long chain of acquaintances.

According to the third method of transmitting information providing control over the transfer of contact and other personal information, users use computers, such as PC, mobile devices, etc., registering users on the server with their contact information, such as mobile phone numbers, identifiers of instant messengers and social networks, etc. Assigning identifiers under which contact and other personal information is saved to the server, and user's contact information is hidden, including from the users. After that, the server is connected to at least one information exchange service such as social networks, networks of mobile operators, etc. User devices are given the opportunity to exchange identifiers, under which their contact and other personal information is stored, thus for every single identifiers transmitting it will be necessary to get confirmation of the user, to which this identifier is assigned. For example, when transmitting user identifier A, the identifier is not transmitted to the device until user A confirms such transfer, and for these purposes, the server creates a request to user A each time when other users want to transfer his identifier to each other. Server stored contact and other information about the user and for this information assigned an identifier. Using this identifier and his device, user can create request on server for connection with user, whose contact information is assigned with identifier. After a user's request containing another user's identifier and information about the data exchange service, for example, the mobile operator's network, the server uses the mobile phone numbers of the user who created the request and the user which identifier is contained in the request for user communication.

Contact and other personal information assigned to the transmitted identifiers is hidden, showing users on their devices general information about the users to whom these identifiers are assigned and allow users to initiate requests by clicking on general information about users and services with which you can contact them. Thus eliminating the uncontrolled transfer of contact information.

The transmission of the above identifiers can be carried out using any communication standards and protocols.

The described third method involves a centralized system.

According to the fourth method of transmitting information providing control of the transfer of contact and other personal information, mobile devices of users are able to exchange contact and general information about users, and the contact information of users is not displayed on mobile devices and tied to general information about users, but general information about users is displayed on mobile devices and by means of general information using the contact information assigned to it, wherein before contact information is requested to confirm such a transfer from the user's device whose contact information is being transmitted. For example, user A wants to transfer the contact of user B to user C. Then, before transferring the contact, the device of user A creates a request to user B with the request to allow the transfer of the contact to user C, and if user B confirms such a transfer, user C receives the contact of user B. The fourth method is described decentralized system in which the server is not used.

## Claims

1. An information transmission method, in which at first, with the using of computer registering users on server with their contact information, conferring identifiers and hiding users contact information, after that the server connecting to at least one data exchange service and user's devices can exchange written above identifiers, thus for every single identifiers transmitting it will be necessary to get confirmation of the user, to which this identifier is assigned, after user's request, which include another user's identifiers and information about data exchange service, providing information transmission with the using of the server between these users with using of mentioned service in request and contact information for that service.

2. The information transmission method according to claim 2, wherein transferable identifiers are hidden, thus showing for users on their devices only general information about users to which this identifiers is assigned and giving for users opportunity to initiate requests by pressing on general information about users and services which can be used to connect with this users.

3. An information transmission method, which providing opportunity for mobile devices of users to exchange contact and general information about users, wherein the users contact information wouldn't displaying on mobile devices and this information will be assigning to general information about users, and the general information about users will be displaying on mobile devices and with help of general information using assigned to it contact information, and before contact information transmission, requesting confirmation of the transmission from the user's device who's contact information transmitting.

4. The information transmission method according to any of claims 1-3, wherein with the using of server receiving the request from user created on mobile device which include information about another user, after that on the mobile device of user, transmitting personal information about users, which are in their mobile devices phonebooks, simultaneously by user who create request and the user which information about is contained in the request.

5. The information transmission method according to any of claims 1-3, wherein with the using of a server receiving the user's request, created on user mobile device, which have information about sought user, further with the help of server which have admission to database of users contacts information, execute searching of coinciding contacts, analyzing contacts of user who entered request and sought user and divided all contacts by two groups, in first group all contacts of the user who entered request, in second group all sought user contacts, further comparing contacts from first and second groups between themselves and if contact coincidences between first and second group didn't find it will analyzing the contacts of all contacts from the first and second groups, replenishing the number of analyzing contacts in each of the groups, comparing the contacts of the first and second groups with each other in search of coincidences, if matches between the first group and second group are not found, continuing to replenish the number of contacts in the first and second groups due to the contacts that the contacts in the first and second groups have, and compare them until coincidences contacts are found between the first and second groups, after coincidences are found at any step of comparison, a chain of contacts built according to the principle of the shortest path of contacts from the user who created the request to the sought user, reported for the user who entered the request.
